(19) Europäisches Patentamt
European Patent Office
Office européen des brevets

(11) EP 2 789 987 A2

(12) **EUROPEAN PATENT APPLICATION**

(43) Date of publication:
15.10.2014 Bulletin 2014/42

(51) Int Cl.:
*G01D 5/22* (2006.01)

(21) Application number: 13187425.7

(22) Date of filing: 04.10.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 10.04.2013 EP 13163196

(71) Applicant: Tyco Electronics AMP GmbH
64625 Bensheim (DE)

(72) Inventors:
• Wolf, Marco
76879 Hochstadt (DE)
• Rieder, Martin
67105 Schifferstadt (DE)

(74) Representative: Grünecker, Kinkeldey, Stockmair & Schwanhäusser
Leopoldstrasse 4
80802 München (DE)

(54) **Magnetic sensor, magnetic field sensor, contactless position sensor, and contactless position sensor system**

(57) The invention relates to a magnetic sensor, a magnetic field sensor, a contactless position sensor, and a contactless position sensor system. Such a magnetic sensor (100) for detecting a magnetic saturation state of a magnetic permeable core comprised in a sensor coil comprises at least one sensor coil (1) each comprising a magnetic permeable core (5), and a primary and secondary winding (9-1, 9-2) surrounding the magnetic permeable core (5). An electrical circuit (17) is configured to drive a low frequency current (I1) within the primary winding (9-1) of the at least one sensor coil (1) for magnetization of the magnetic permeable core (5) into a magnetic saturation state. The electrical circuit (17) is further configured to detect the magnetic saturation state of the magnetic permeable core (5) based on an inductance of the at least one sensor coil (1) determined by the electrical circuit (17) driving a high frequency current (I2) within the at least one sensor coil (1).

Fig. 1

## Description

The invention relates to an improved magnetic sensor for detecting a magnetic saturation state of a magnetic permeable core comprised in a sensor coil. Additionally, the invention focuses on an advantageous magnetic field sensor incorporating the magnetic sensor for detecting a magnetic field in a sensor coil when its magnetic permeable core is in a magnetic saturation state. The invention further defines an improved contactless position sensor incorporating the magnetic field sensor for detecting a position of an at least partly ferromagnetic target and a contactless position sensor system incorporating same contactless position sensor.

Conventionally, a magnetic sensor includes a sensor coil supplied with a predetermined drive current. The sensor coil may include a magnetic permeable core and windings surrounding the magnetic permeable core. The predetermined drive current is driven within a winding of the sensor coil so as to magnetize the magnetic permeable core of the sensor coil.

Depending on the characteristics (e.g. magnitude, frequency, and phase) of the determined drive current, the magnetic permeable core of the magnetic sensor may be magnetized into a magnetic saturation state. The magnetic saturation state depends on the properties of the magnetic permeable core (e.g. material, geometry), and hence is predetermined for a magnetic sensor.

In the context of the invention, the magnetic saturation state shall be understood as the state reached when an increase in applied magnetic field H cannot increase the magnetization of the material further, so the total magnetic flux density B levels off.

Further, the magnetic sensor detects the magnetic saturation state. In other words, the magnetic sensor not only drives a drive current in the sensor coil for magnetization of the magnetic permeable core but also subsequently detect whether or not the magnetic permeable core is actually in a magnetic saturation state.

As already suggested above, the magnetic saturation state is a magnetization state of the magnetic permeable core in the magnetic sensor. In this respect, a measurement or detection of the magnetic saturation state is difficult from the outside of the sensor coil of the magnetic sensor.

Nevertheless, various magnetic sensors are suggested to detect the magnetic saturation state of their magnetic permeable core. This working principle is advantageous in that the magnetic saturation state of a magnetic sensor may be used for detection of an external magnetic field (i.e. a magnetic field outside of the magnetic sensor).

Specifically, the presence or absence of an external magnetic field may result in the magnetic sensor detecting a magnetic saturation state for the magnetic permeable core at an earlier or later point in time with respect to a situation without an external magnetic field.

In more detail, an externally applied magnetic field interacts within that provided in the sensor coil, i.e. with an internal magnetic field induced by the predetermined drive current. The amount of interaction between the two magnetic fields is detectable by way of determining the magnetic saturation state of their magnetic permeable core.

A field of application of the magnetic sensors is, for example, that of contactless position sensors.

Contactless position sensors are utilized for the detection of rotational movement or longitudinal movement, in particular, for the detection of a position of an object performing same movement. For this purpose, the object is equipped with a target as position indicator element. The target generates or interacts with an external magnetic field. Changes in the external magnetic field can be detected by the contactless position sensor.

Further, a contactless position sensor may, for example, include one or plural magnetic sensors with at least two sensor coils that separately detect the amount of interaction between the two magnetic fields, i.e. the external magnetic field by way of detection of the magnetic saturation state. By way of a subsequent processing of the detection results for each of the at least two sensor coils, a position information can be generated for the object equipped with the target.

In an exemplary deployment scenario for a contactless position sensor the target includes a permanent magnet. A movement of the permanent magnet as target in the vicinity of the contactless position sensor changes the external magnetic field to which the contactless position sensor is exposed. Such a variation in external magnetic field is, for instance, detectable as a change in the electrical inductance L in the sensor coil of the contactless position sensor.

An alternative deployment scenario for a contactless position sensor is proposed in EP 0 684 454 A1. Therein, a rotational movement of a ferromagnetic gear is to be detected. Instead of positioning a permanent magnet as target on one or a plurality of teeth of the gear, it is suggested to position a permanent magnet in-between the contactless position sensor and the ferromagnetic gear. When, during rotation, a ferromagnetic tooth of the gear is positioned in close proximity to the permanent magnet, the magnetic field of the permanent magnet is deflected. This change in external magnetic field is detectable within the contactless position sensor.

In the document, it is recognized that the proposed arrangement allows for a wider distance between the contactless position sensor and the target and dispenses with the need of fixing permanent magnets as position indicator elements on the teeth of the gear as targets. Furthermore, the rotational movement of a gear may also be detected in a configuration where a wall separates the contactless position sensor from the permanent magnet.

The development of contactless position sensors has encountered various refinements as shall be discussed with reference to EP 0 891 560 B1. The contactless position sensor described therein has ever since been recognized to provide a simple but precise method for detecting an external magnetic field.

In this respect, the working principle of the disclosed contactless position sensor shall be explained in the following:

If a sensor coil is operated within a non-saturated state of a ferromagnetic core included in the sensor coil, the sensor coil mainly acts as constant electrical impedance (inductive reactance). This results from the fact that the magnetization of the ferromagnetic core increases, in a non-saturated state, with the applied magnetic field. When the magnetization of the ferromagnetic core reaches a saturated state, then the electrical impedance (inductive reactance) of the sensor coil significantly decreases.

Commonly, the transition region between a non-saturated and a saturated state for a ferromagnetic core is used as "working point" of a detector coil. In this transition region, a change in an externally applied magnetic field results in a change in electrical impedance (inductive reactance). This change in electrical impedance (inductive reactance) is proportional to an external magnetic filed ($H_{ext}$) such that an electronic circuit may, in determining the electrical impedance (inductive reactance), derive the variation in the external magnetic filed ($\Delta H_{ext}$).

In EP 0 891 560 B1, it is further suggested to supply a current to the sensor coil which includes positive and negative current pulses. A current pulse is described as comprising a raising edge and a falling edge resulting in essential rectangular-shaped current pulses. Specifically, the amplitude of the positive and negative current pulses is adapted such that the ferromagnetic core of the sensor coil is driven into a saturation state of positive and negative polarity. Accordingly, in case of a positive current pulse, the internal magnetic field amounts to: $H_{int}$ = n/l *I. The ferromagnetic core of the sensor coil is magnetized by a remainder of the internal magnetic field $H_{int}$ increased/reduced by the external magnetic field $H_{ext}$.

Specifically, in response to the raising edge of a current pulse, the sensor coil experiences a voltage peak due to the counter-electromotive force pushing against the current inducing it. In response to the falling edge of a current pulse, the sensor coil experiences a second voltage peak with opposite polarity. This second voltage peak results from self-inductance L of the magnetized sensor coil, where the voltage signal is determined as v = L di/dt.

Accordingly, the height of the second voltage peak depends on the magnetization of the magnetic core of the sensor coil which is based on the remainder of the internal magnetic field $H_{int}$ increased/reduced by the external magnetic field $H_{ext}$. Consequently, the height of the second voltage peak allows detecting a presence/absence of an external magnetic field.

In more detail, the contactless position sensor detects amplitudes of voltage peak for falling edges of positive current pulses as well as of negative current pulses, and uses both amplitude values for determining the presence/absence of an external magnetic field. In comparing the detected amplitudes of voltage peaks with previous detection results, it is possible to determine the amount of change of the external magnetization filed $\Delta H_{ext}$, i.e. a movement of the target with respect to the contactless position sensor.

As can be readily appreciated from the above, the detection of the magnetic saturation state within the above described contactless position sensor is limited in its accuracy and difficult in its realizations.

In this respect, it is an object of the invention to suggest an improved magnetic sensor which overcomes the disadvantages noted above. According to a further object, a magnetic sensor is suggested which allows for a more accurate detection of the magnetic saturation state of the magnetic permeable core in a sensor coil within the magnetic sensor. A magnetic sensor according to and even further object, allows for simple and clean circuit design of the electrical circuit for detecting the magnetic saturation state of the magnetic permeable core in the sensor coil.

At least one of the above mentioned objects is solved by the subject-matter of the independent claims. Advantageous embodiments are subject to the dependent claims. According to a first aspect of the invention which is in line with the first object noted above, a magnetic sensor is suggested that makes use of a special property of a sensor coil, namely that the inductance L of the sensor coil decreases when its magnetic permeable core is in a magnetic saturation state.

In other words, in the proposed magnetic sensor the inductance L of the winding surrounding the magnetic permeable core reduces once the magnetic permeable core is magnetized into a magnetic saturation state. Consequently, the suggested magnetic sensor detects the magnetic saturation state of the magnetic permeable core based on an inductance of the sensor coil.

According to a second aspect of the invention which is also in line with the second object, a magnetic sensor is proposed which incorporates at least one sensor coil, each with a magnetic permeable core and a primary and secondary winding surrounding the magnetic permeable core.

Due to the two windings of the sensor coil, one can be used for magnetization of the magnetic permeable core into a magnetic saturation state and the other can be used for subsequent detection of the magnetic saturation state. Consequently, the detection of the magnetic saturation state does not require compensation of magnetization effects (which would be the case if magnetization and detection were performed via a same winding of the sensor coil), thereby resulting in a simple and clean circuit design.

Both aspects can be readily combined as becomes apparent from the various embodiment described below.

According to one exemplary embodiment of the invention, a magnetic sensor 100 is suggested for detecting a magnetic saturation state of a magnetic permeable core comprised in a sensor coil. The magnetic sensor 100 comprises at least one sensor coil 1 each comprising a magnetic permeable core 5, and a primary and secondary winding 9-1, 9-2 surrounding the magnetic permeable core 5. The magnetic sensor 100 further comprises an electrical circuit 17 configured to drive a low frequency current $I_1$ within the primary winding 9-1 of the at least one sensor coil 1 for magnetization of the magnetic permeable core 5 into a magnetic saturation state. The electrical circuit 17 is further configured to detect the magnetic saturation state of the magnetic permeable core 5 based on an inductance of the at least one sensor coil 1 determined by the electrical circuit 17 driving a high frequency current I2 within the at least one sensor coil 1.

According to another more detailed embodiment, the electrical circuit 17 of the magnetic sensor 100 is either configured to drive the high frequency current $I_2$, superimposed on the low frequency current $I_1$, within the primary winding 9-1 of the at least one sensor coil 1 or configured to drive the high frequency current $I_2$ within the secondary winding 9-2 of the at least one sensor coil 1.

According to another more detailed embodiment, the electrical circuit 17 of the magnetic sensor 100 is configured to detect the magnetic saturation state of the magnetic permeable core 5 by comparing the determined inductance level to a pre-determined threshold level.

According to another more detailed embodiment, the electrical circuit 17 of the magnetic sensor 100 is configured such that the inductance of the at least one sensor coil 1 is determined as inductance of the secondary winding 9-2 of the at least one sensor coil 1.

According to another more detailed embodiment, the electrical circuit 17 of the magnetic sensor 100 is configured such that the inductance of the at least one sensor coil 1 is determined based on the high frequency voltage component VH across the at least one sensor coil 1.

According to another more detailed embodiment, the electrical circuit 17 of the magnetic sensor 100 is configured such that the inductance of the at least one sensor coil 1 is determined based on either the amplitude level or the frequency of the high frequency voltage component VH across the at least one sensor coil 1.

According to another more detailed embodiment, the electrical circuit 17 of the magnetic sensor 200 comprises a capacitor C1 for each of the at least one sensor coil 1, the capacitor C1 being connected to the secondary winding 9-2 of the at least one sensor coil 1 such that an LC oscillator 18 is formed.

According to another more detailed embodiment, the LC oscillator 18, formed by the capacitor C1 and the secondary winding 9-2, is configured to oscillate thereby driving the high frequency current $I_2$ within the secondary winding 9-2 of the at least one sensor coil 1.

According to another more detailed embodiment, the electrical circuit 17 of the magnetic sensor 200 further comprises an amplifier 19 for each of the at least one sensor coil 1, the amplifier 19 being configured to stimulate the LC oscillator 18 such that it oscillates.

According to another more detailed embodiment, the electrical circuit 17 of the magnetic sensor 200 is configured such that the inductance of the at least one sensor coil 1 is determined based on the oscillation frequency of the LC oscillator 19.

According to another more detailed embodiment, wherein, in case the magnetic sensor 300 comprises at least two sensor coils 1; 2, the at least two sensor coils 1; 2 of the magnetic sensor 300 are connected to each other such that the primary windings 9-1, 10-1 of each of the at least two sensor coils 1, 2 form a series circuit; and the electrical circuit 17 is configured to drive the low frequency current $I_1$ within the series circuit of primary windings 9-1, 10-1 of each of the at least two sensor coils 1,2.

According to a further exemplary embodiment of the invention, a magnetic field sensor is suggested for detecting a magnetic field in a sensor coil when its magnetic permeable core is in a magnetic saturation state. The magnetic field sensor comprises the magnetic sensor 200, wherein the electrical circuit 17 is configured to determine, when the magnetic saturation state is detected, a value of the low frequency current $I_1$ which is driven within the primary winding 9-1 of the at least one sensor coil 1, the detected value of the low frequency current $I_1$ corresponding to the magnetic field in the at least one sensor coil 1.

According to a further exemplary embodiment of the invention, a contactless position sensor is suggested for detecting the position of a ferromagnetic target by way of deflection of an external magnetic field. The contactless position sensor comprises the magnetic sensor 300, wherein the magnetic sensor 300 comprises at least two sensor coils 1, 2, and wherein the electrical circuit 17 is configured to drive a predetermining current I including, as components, the low frequency current $I_1$ and the high frequency current $I_2$, within each of the at least two sensor coils. The electrical circuit is configured to detect the position of the ferromagnetic target by subtracting from each other amplitude levels of the determined high frequency voltage components of two of the voltages across the respective of the at least two sensor coils, and by comparing the subtraction result to a pre-determined reference pattern.

According to a further exemplary embodiment of the invention, the at least two sensor coils of the contactless position sensor each comprises a magnetic permeable core and windings surrounding the magnetic permeable core defining a coil axis. The at least two sensor coils are arranged with the coil axes essentially in parallel to each other, and with one end of each of the at least two sensor coils facing a space for a ferromagnetic target 20 to move across with respect to each of the at least two coil axes.

According to a further exemplary embodiment of the invention, a contactless position sensor system is suggested that comprises a contactless position sensor, and a permanent magnet arranged in-between the at least two sensor coils for generating an external magnetic field which is essentially perpendicular with respect to each of the at least two coil axes. The contactless position sensor system further comprises a ferromagnetic target which is to be moved across with respect to each of the at least two coil axes in a space faced by one end of each of the at least two sensor coils, wherein the contactless position sensor detects a position of a ferromagnetic target by way of deflection of the external magnetic field.

The accompanying drawings are incorporated into the specification and form a part of the specification to illustrate several embodiments of the present invention. These drawings, together with a description, serve to explain the principles of the invention. The drawings are merely for the purpose of illustrating the preferred and alternative examples of how the invention can be made and used, and are not to be construed as limiting the invention to only the illustrated and described embodiments.

Furthermore, several aspects of the embodiments may form - individually or in different combinations - solutions according to the present invention. Further features and advantages will be become apparent from the following more particular description of the various embodiments of the invention as illustrated in the accompanying drawings, in which like references refer to like elements, and wherein:

Fig. 1    schematically shows a magnetic sensor according to a first embodiment of the invention including signal plots during operation;

Fig. 2    schematically shows another magnetic sensor according to a second embodiment of the invention including signal plots during operation; and

Fig. 3    schematically shows a further magnetic sensor according to a third embodiment of the invention.

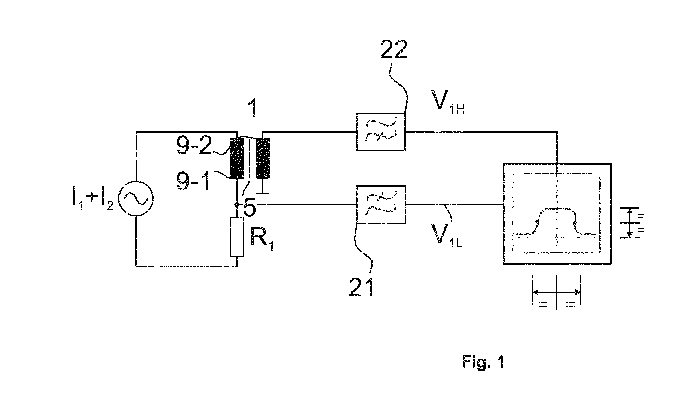

Referring now to Fig. 1, a schematic diagram of the magnetic sensor 100 according to the first embodiment of the invention is shown. In this context, it has to be emphasized that the illustrated magnetic sensor 100, realizes one of various alternative implementations of a magnetic sensor according to the first embodiment. Accordingly, the following description of the magnetic sensor 100 shall not be construed as limiting the invention.

The magnetic sensor 100 includes a sensor coil 1 comprising a magnetic permeable core 5, and a primary and secondary winding 9-1 and 9-2. The primary and secondary windings 9-1 and 9-2 are both surrounding the magnetic permeable core 5. In this respect, the sensor coil 1 of the magnetic sensor 100 may be referred to as transformer since an inductive coupling is provided between same primary and secondary winding 9-1 and 9-2.

Each of the primary and secondary winding 9-1 and 9-2 has a pre-determined number of windings; $N_P$ is the number of windings of the primary winding 9-1 and $N_S$ is the number of windings of the secondary winding 9-2 of the sensor coil 1. The numbers of windings Np and Ns for the primary and the secondary winding 9-1 and 9-2 may be same or may differ depending on the required inductive coupling of the sensor coil 1.

In the magnetic sensor 100, the sensor coil 1 has for the primary winding 9-1: Np > 1000 number of windings, and for the secondary windings 9-2: Ns < 100 number of windings. Thereby, an advantageous trade off between a high inductive coupling and small dimensions of the secondary winding 9-2 is achieved for the sensor coil 1. Due to small dimensions of the secondary winding 9-2, the footprint of the sensor coil 1 as well as that of the magnetic sensor 100 can be reduced.

The magnetic sensor 100 is not restricted to comprise only a single sensor coil but may also include a plurality of sensor coils as shall become apparent from the discussion below. For example, a contactless position sensor includes a magnetic sensor with at least two sensor coils for detecting the position of a target.

For detection of a magnetic saturation state, the magnetic sensor 100 further includes an electrical circuit 17. Exemplarily, the electrical circuit 17 includes a current source for driving a pre-determined current within the sensor coil 1. Alternatively, the electrical circuit 17 may also include a voltage source which is equally capable of driving the same pre-determined current within the sensor coil.

In the magnetic sensor 100, the electrical circuit 17 is configured to drive a low frequency current $I_1$ within the primary winding 9-1 of the sensor coil 1. Additionally, for determining an inductance of the sensor coil, the electrical circuit 17 also drives a high frequency current $I_2$ within the sensor coil 1.

In this respect, a distinction is made between the electrical circuit 17 driving a low frequency current $I_1$ and a high frequency current $I_2$ within the sensor coil 1. Advantageously, the low frequency current $I_1$ has a frequency of $f_1 = 1$ kHz and the high frequency current $I_2$ has a frequency of $f_2 = 100$ kHz. Accordingly, the two currents $I_1$ and $I_2$ are clearly distinct and, hence, cannot be understood as harmonics of one another.

In an exemplary realization of the magnetic sensor 100, the low frequency current $I_1$ and the high frequency current $I_2$ to be driven by the electrical circuit 17 both have an alternating current AC waveform without offset. Accordingly, the low and the high frequency cur-

rents $I_1$ and $I_2$ both have a sinusoidal shape with respective peak values $\hat{I}_1$ or $\hat{I}_2$. The term $\hat{I}$ denotes the peak amplitude.

Alternatively, the waveform of each of the low frequency current $I_1$ and the high frequency current $I_2$ may be an alternating current with offset, a pulse-shaped current with or without offset, a triangular-shaped current with or without offset and other digital-to-analogue converted alternating waveforms with or without offset.

The electrical circuit 17 the magnetic sensor 100 is configured to drive a low frequency current $I_1$ within the primary winding 9-1 of the sensor coil 1. Thereby, the electrical circuit 17 magnetizes the magnetic permeable core 5 into a magnetic saturation state. In other words, the low frequency current $I_1$ is pre-determined such that the magnetic permeable core 5 of the sensor coil 1, for at least some point in time, is in a magnetic saturation state.

Advantageously, in case an alternating current without offset is utilized in the magnetic sensor 100 for the low frequency current $I_1$, the electrical circuit 17 magnetizes the magnetic permeable core 5 with an internal magnetic field of alternating polarity. In this respect, the hysteresis effect can be minimized in the magnetic sensor 100 and the magnetic saturation state of the magnetic permeable core 5 becomes directly dependent on the low frequency current $I_1$.

Further, the electrical circuit 17 of the magnetic sensor 100 is configured to detect the magnetic saturation state of the magnetic permeable core 5. For this purpose, the electrical circuit 17 determines the inductance L of the sensor coil 1. The inductance L of the sensor coil 1 is determined by the electrical circuit 17 driving a high frequency current $I_2$ within the sensor coil 1.

The electrical circuit, according to an advantageous realization, may be configured to detect the magnetic saturation state of the sensor coil by comparing the determined inductance L to a pre-determined threshold value. In the magnetic saturated state, the inductance L of the sensor coil decreases by a predefined amount; accordingly, the magnetic saturated state is to be detected by the electrical circuit when the determined inductance of the sensor coil undercuts the pre-determined threshold value.

In the magnetic sensor 100, the high frequency current $I_2$ is driven by the electrical circuit 17 within the primary winding 9-1 of the sensor coil 1. Accordingly, the electrical circuit 17 drives within the primary winding 9-1 a superposition of the low frequency current $I_1$ and the high frequency current $I_2$. Further, for the determination of the inductance L of the sensor coil 1, the secondary winding 9-2 of the sensor coil 1 is used by the magnetic sensor 100.

Alternative realizations of the magnetic sensor may also drive the high frequency current $I_2$ within the secondary winding of the sensor coil and use the same, secondary winding for determination of the inductance L, as is described below with respect to the second embodiment.

In general, the magnetic sensor 100 relies on the effect that the inductive coupling between the primary and the secondary winding 9-1 and 9-2 of the sensor coil 1 is disadvantageously affected by the magnetic saturation state of the magnetic permeable core 5.

In other words, the magnetic sensor 100 detects a magnetic saturation state as result of the deterioration of or absence of inductive coupling between the primary and secondary winding 9-1 and 9-2 of the sensor coil 1.

This effect shall be exemplified by referring to an ideal transformer. For an ideal transformer induction in the primary winding and in the secondary winding depend on the magnetic flux circulating in the magnetic permeable core.

$$U_P = -N_P \frac{d\phi_P}{dt}, \; U_S = -N_S \frac{d\phi_S}{dt} \quad \text{(formula 1)}$$

Assuming the magnetic flux to pass via the magnetic permeable core between the primary winding and the secondary winding (i.e.: $\phi_P = \phi$), the inductive coupling is defined by the following formula:

$$\frac{U_P}{U_S} = \frac{N_P}{N_S} = \frac{L_P}{L_S} = \ddot{u} \quad \text{(formula 2)}$$

According to the above formula regarding the inductive coupling, the voltage $U_s$ across the secondary winding corresponds to the number $N_P$ of windings of the primary winding, the number $N_S$ of windings of the secondary winding, and the voltage $V_P$ across the primary winding.

As can be readily appreciated from the above formula, the inductive coupling in the ideal transformer is equally defined by the ratio of the inductances L of the primary winding to the secondary winding of the ideal transformer, where either of the inductances $L_P$ or $L_S$ is defined by the geometry of a cylindrical coil as follows:

$$L = \mu_0 \mu_r A \frac{N^2}{l} \quad \text{(formula 3)}$$

Nevertheless, the above is only valid for an ideal transformer where the magnetic permeable core is not in a magnetic saturated state. In other words, for a magnetic permeable core in a magnetic saturation state, the inductive coupling no longer correspond to the ratio $N_P$ to $N_S$ of the number of windings or the ratio of $L_P$ to $L_S$ of the inductances.

As generally known in the art, the magnetic saturation of a magnetic permeable core has an effect on its permeability $\mu_r$. Specifically, the permeability of the magnetic permeable core can vary, depending on whether or not it is in a magnetic saturation state, between the

following values:

$$\mu_r(H \gg H_{sat}) \cong 1$$
$$\mu_r(H < H_{sat}) \cong 100000$$

(formula 4)

In other words, in case the magnetic permeable core is in a magnetic saturation state, it can be approximate with an air-core coupling between the primary and secondary winding of the ideal transformer.

Additionally, the permeability of the magnetic permeable core is also frequency dependent (e.g. due to the skin effect) such that the following values may reflect the permeability of the magnetic permeable core not in a magnetic saturated state:

$$\mu_r(1kHz) \cong 100000$$
$$\mu_r(500kHz) \cong 10000$$

(formula 5)

In summary, the inductive coupling in an ideal transformer and also the inductances L of the windings not only depends on whether or not the magnetic permeable core is in a saturation state but also on the frequency of magnetization.

Referring back to the magnetic sensor 100, the inductive coupling, denoted in the above formula 2, identifies the voltage $V_s$ (or equivalent current) which can be measured, in case of not being in a magnetic saturated state, by the electrical circuit 17 across the secondary winding 9-2 of the sensor coil 1.

Specifically, in the magnetic sensor 100, the superposition of the low and the high frequency current $I_1$ and $I_2$, driven by the electrical circuit 17 in the primary winding 9-1, is transferred to the secondary winding 9-2 with a scaling factor corresponding to the ratio of the number $N_S$ to the number $N_P$ when not in a magnetic saturated state.

Now, in case of a magnetic saturated state (i.e. where the magnetic permeable core 5 is magnetized into a magnetic saturated state), the total magnetic flux density B levels off, i.e. an increase in applied magnetic field H cannot increase the magnetization of the material further.

In this respect, in the magnetic sensor 100, the current $I_s$, which is transferred from the primary winding 9-1 to the secondary winding 9-2, decreases, in case of a magnetic saturation state, by more than the scaling factor corresponding to the ratio of the number $N_S$ to the number $N_P$. In other words, in the magnetic saturation state, magnetic permeable core 5 of the sensor coil 1 limits the amount of current $I_s$ to be transferred from the primary winding 9-1 to the secondary winding 9-2.

In more detail, in a magnetic saturation state, the electrical circuit 17 of the magnetic sensor 100 may no longer detect within the secondary coil 9-2 of the sensor coil 1 a scaled version of the low and the high frequency current $I_1$ and $I_2$ driven within the primary winding 9-1. Instead, in the magnetic saturation state, the magnetization of the magnetic permeable core 5 is limited, and a maximum magnetic flux density $B_{max}$ determines the current to be transferred or the voltage to be induced in the secondary winding 9-2 of the sensor coil.

Additionally, in the magnetic sensor 100, the low and the high frequency current $I_1$ and $I_2$ are also not equally affected with respect to the inductive coupling of the sensor coil 1. As already described above, for higher frequencies the losses in the magnetic permeable core increase (e.g. due to the skin effect). However, these losses are more than compensated by the induction in the primary and secondary winding 9-1 and 9-2 of the sensor coil 1.

For example, the induction in the primary and secondary winding 9-1 and 9-2 of the sensor coil 1 is better by a factor of 100 for a high frequency current $I_2$ at 100 kHz compared to a low frequency current $I_1$ at 1 kHz. At the same time, the frequency dependence of the permeability $\mu_r$ results in losses by a factor of 1/10 for the high frequency current $I_2$ at 100 kHz compared to the for a low frequency current $I_1$ at 1 kHz.

In this respect the inductive coupling between the primary and secondary winding 9-1 and 9-2 is still better by a factor of 10 for the high frequency current $I_2$ at 100 kHz compared to that for a low frequency current $I_1$ at 1 kHz

Accordingly, the high frequency current $I_2$ allows for better determination by the electrical circuit 17 of the inductance of the sensor coil 1 by the electrical circuit 17 as compared to a determination based on the low frequency current $I_1$. Consequently, the high frequency current $I_2$ is utilized for the detection of whether or not the magnetic permeable core 5 is magnetized into a magnetic saturation state.

The electrical circuit 17 of the magnetic sensor 100 is configured such that the inductance of the sensor coil 1 is determined based on a high frequency voltage component $V_H$ across the sensor coil 1. Specifically, the electrical circuit 17 determines the inductance based on the high frequency voltage component $V_H$ across the secondary winding 9-2 of the sensor coil 1. This high frequency voltage component $V_H$, based on which the inductance is determined, results from the high frequency current component $I_1$ driven in the primary winding 9-1 of the sensor coil 1.

In other words, the high frequency voltage component $V_H$ is induced in the secondary winding 9-2 due to the electrical circuit 17 driving the high frequency current component $I_1$ in the primary winding 9-1 of the sensor coil 1. In this respect, the high frequency voltage component $V_H$ benefits from the frequency selectivity of the induction in the primary and secondary winding 9-1 and 9-2 of the sensor coil 1.

In an alternative realization, the electrical circuit 17 of the magnetic sensor 100 may also be configured such that the inductance of the sensor coil 1 is determined based on the high frequency current component flowing in the secondary winding 9-2 of the sensor coil 1. The high frequency current component is directly proportional to the high frequency voltage component $V_H$ described above. In this respect, it can be readily appreciated that the determination of the inductance of the sensor coil is also possible in this respect.

In the magnetic sensor 100, the electrical circuit 17 is configured such that the inductance of the sensor coil 1 is determined based on the amplitude of the high frequency voltage component $V_H$ across the sensor coil 1, or in particular, across the secondary winding 9-2 of the sensor coil 1.

In summary, by the electrical circuit 17 of the magnetic circuit 100 determining the inductance of the sensor coil 1, the magnetic saturation state can be detected in the magnetic permeable core 5. Accordingly, the magnetic sensor 100 may be incorporated into a magnetic field sensor for detecting a magnetic field in a sensor coil when its magnetic permeable core is in a magnetic saturation state.

Specifically, such a magnetic field sensor with the magnetic sensor 100 comprises the sensor coil 1 and the electrical circuit 17 described above. The electrical circuit 17 is further configured to determine, when the magnetic saturation state is detected, a value of the low frequency current $I_1$ which is driven within the primary winding 9-1 of the at least one sensor coil 1. The detected value of the low frequency current $I_1$ corresponding to the magnetic field in the at least one sensor coil 1.

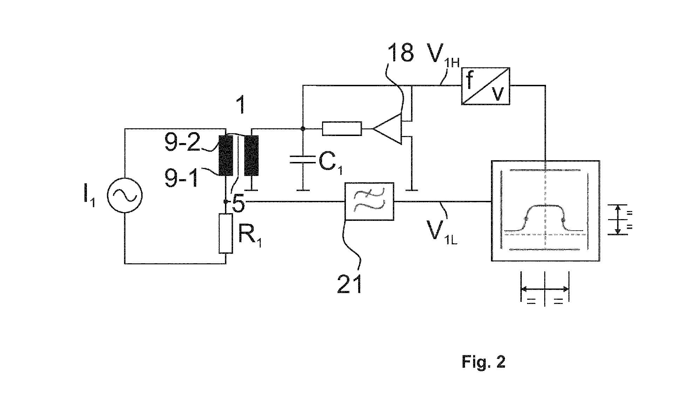

Referring now to Fig. 2, a schematic diagram of a magnetic sensor 200 according to the second embodiment is shown. Also in this context, it shall be emphasized that the magnetic sensor 200, illustrated in Fig. 2, realizes one of various alternative implementations of magnetic sensors according to the second embodiment. In this respect, the description of the magnetic sensor 200 should also not be construed as limiting the invention.

The magnetic sensor 200 comprises the previously detailed sensor coil 1 and an electrical circuit 17' which allows detection of a magnetic saturation state of a magnetic permeable core comprised in the sensor coil. However, the working principle on which the magnetic sensor 200 differs from that employed in the magnetic sensor 100 is described in the following.

As already outlined in connection with the magnetic sensor 100, the sensor coil 1 of magnetic sensor 200 comprises a magnetic permeable core 5 and a primary and secondary winding 9-1 and 9-2. The primary and secondary winding 9-1 and 9-2 are surrounding the magnetic permeable core 5. In this respect, the sensor coil 1 of magnetic sensor 200 corresponds to that of the magnetic sensor 100.

Additionally, the magnetic sensor 200 comprises an electrical circuit 17' which differs from that of magnetic sensor 100. Also the electrical circuit 17' allows detection of a magnetic saturation state of the magnetic permeable core 5 of the sensor coil 1, as shall become apparent from the following.

The electrical circuit 17' of the magnetic sensor 200 is configured to drive a low frequency current $I_1$ within the primary winding 9-1 of the sensor coil 1. For determining an inductance of the sensor coil, the electrical circuit 17' also drives a high frequency current $I_2$ within the sensor coil 1, namely within the secondary winding 9-2 of the sensor coil. For conciseness, it shall be only referred to the first embodiment for the definition of the low and the high frequency current $I_1$ and $I_2$.

In the magnetic sensor 200, the electrical circuit 17' is also configured to drive a low frequency current $I_1$ within the primary winding 9-1 of the sensor coil 1. Thereby, the electrical circuit 17' magnetizes the magnetic permeable core 5 into a magnetic saturation state. In other words, the low frequency current $I_1$ is pre-determined such that the magnetic permeable core 5 of the sensor coil 1 is, for at least some point in time, in a magnetic saturation state.

Further, the electrical circuit 17' of the magnetic sensor 200 is configured to detect the magnetic saturation state of the magnetic permeable core 5. For this purpose, the electrical circuit 17' determines the inductance L of the sensor coil 1. The inductance L of the sensor coil 1 is determined by the electrical circuit 17 driving the high frequency current $I_2$ within the sensor coil 1, namely within the secondary winding 9-2 of the sensor coil 1.

For determining the inductance L of the sensor coil 1, the electrical circuit 17' of the magnetic sensor 200 comprises a capacitor C1 connected to the secondary winding 9-2 of the sensor coil 1 such that an LC oscillator 18 is formed. The secondary winding 9-2 of the sensor coil 1 acts as inductor with inductance L for the high frequency current $I_2$ driven within the secondary winding 9-2 of the sensor coil 1.

In the magnetic sensor 200, the capacitor C1 of the electrical circuit 17' is connected in parallel to the secondary winding 9-2 of the sensor coil 1, such that the inductance L of the secondary winding 9-2 together with the capacitance of the capacitor C1 form a parallel LC oscillator circuit.

In an alternative realization, the electrical circuit 17' of the magnetic sensor 200 may also be configured such that the capacitor C1 is connected in series to the secondary winding 9-2 of the sensor coil 1, thereby forming a series LC oscillator circuit.

The LC oscillator 18 of the magnetic sensor 200, formed of the capacitor C1 and the inductance L of the secondary winding 9-2, is configured to oscillate at a resonance frequency thereby driving the high frequency current $I_2$ within the secondary winding 9-2 of the sensor coil 1. This resonance frequency at which the LC oscillator 18 oscillates is then used by the electrical circuit 17' for determining the inductance L of sensor coil 1 by the electrical circuit 17'.

Advantageously, in the magnetic sensor 200, the capacitance of the capacitor C1 of the electrical circuit 17' is configured to match an approximated inductance of the secondary winding 9-2 of the sensor coil 1 because the resonance effect of the LC oscillator 18 is highest when inductance and capacitance are equal in magnitude.

The electrical circuit 17' of the magnetic sensor 200 is configured such that the inductance of the sensor coil 1 is determined based on the frequency of the high frequency voltage component $V_H$ across the sensor coil 1, namely across the secondary winding 9-2 of the sensor coil 1. The frequency of the high frequency voltage component $V_H$ changes with respect to whether or not the magnetic permeable core 5 is in a magnetic saturation state thereby allowing detection by the electrical circuit 17' of the magnetic sensor 200 of the magnetic saturation state.

In more detail, the electrical circuit 17' of the magnetic sensor 200 is configured such that the inductance L of the sensor coil is determined according to the oscillation frequency of the LC oscillator 18. Based on the determined inductance, the electrical circuit 17' of the magnetic sensor can detect the magnetic saturation state of the magnetic permeable core 5.

In the magnetic sensor 200, the oscillation at resonance frequency of the LC oscillator 18 is stimulated by the electrical circuit 17' of the magnetic sensor 200 further comprising an amplifier 19. Specifically, the amplifier 19, comprised in the electrical circuit 17', is advantageously realized as non-inverting amplifier with a feedback loop. In this respect, the amplifier 19 receives, via the feedback loop, as the input, the voltage across the LC oscillator 18 and supplies an amplified version of same voltage to stimulate oscillation of the LC oscillator 18.

In general, the magnetic sensor 200 relies on the effect that the oscillation of the LC oscillator 18 depends on the inductance L of the sensor coil 1, namely of the secondary winding 9-2 of the sensor coil 1.

Specifically, the resonance frequency of the LC oscillator 18 depends on the inductance L of the secondary winding 9-2 and on the capacitance of the capacitor C1.

The resonance frequency of an LC oscillator is given by the following formula:

$$\omega_0 = \frac{1}{\sqrt{LC}} \qquad \text{(formula 6)}$$

With respect to the effect of whether or not the magnetic permeable core is magnetized into the magnetic saturation state, the inductance $L_S$ of the secondary winding can be approximated by the following formula already presented above:

$$L = \mu_0 \mu_r A \frac{N^2}{l} \qquad \text{(formula 7)}$$

As already described, the magnetic saturation of a magnetic permeable core has an effect on its permeability $\mu_r$. Specifically, the permeability of the magnetic permeable core can vary, depending on whether or not it is in a magnetic saturation state between the following values:

$$\mu_r(H \gg H_{sat}) \cong 1$$
$$\mu_r(H < H_{sat}) \cong 100000 \qquad \text{(formula 8)}$$

Accordingly, in case the magnetic permeable core is in a magnetic saturation state, the inductance L of the secondary winding drastically decreases with respect to the case where the magnetic permeable core is not in a magnetic saturation state.

In this respect, the electrical circuit 17' of the magnetic sensor 200 is enabled to determine the inductance L of the sensor coil 1, namely of the secondary winding 9-2 of the sensor coil 1, based on the frequency of the high frequency voltage component $V_H$ across the secondary winding 9-2 of the sensor coil 1. The high frequency voltage component $V_H$ results from the high frequency current component $I_1$ driven in the primary winding 9-1 of the sensor coil 1.

Further, since the frequency of the high frequency voltage component $V_H$ across the secondary winding 9-2 of the sensor coil 1 is dominated by the oscillation frequency of the LC oscillator 18, same also allows determining the inductance L of the sensor coil 1, namely of the secondary winding 9-2 of the sensor coil 1, by the electrical circuit 17'.

In summary, due to the electrical circuit 17' of the magnetic sensor 200 determining the inductance L of the sensor coil 1, the magnetic saturation state can be detected in the magnetic permeable core 5. Accordingly, also the magnetic sensor 200 may be incorporated into a magnetic field sensor for detecting a magnetic field in a sensor coil when its magnetic permeable core is in a magnetic saturation state.

Specifically, such a magnetic field sensor with the magnetic sensor 200 comprises the sensor coil 1 and the electrical circuit 17' described above. The electrical circuit 17' is further configured to determine, when the magnetic saturation state is detected, a value of the low frequency current $I_1$ which is driven within the primary winding 9-1 of the at least one sensor coil 1. The detected value of the low frequency current $I_1$ corresponds to the magnetic field in the at least one sensor coil 1.

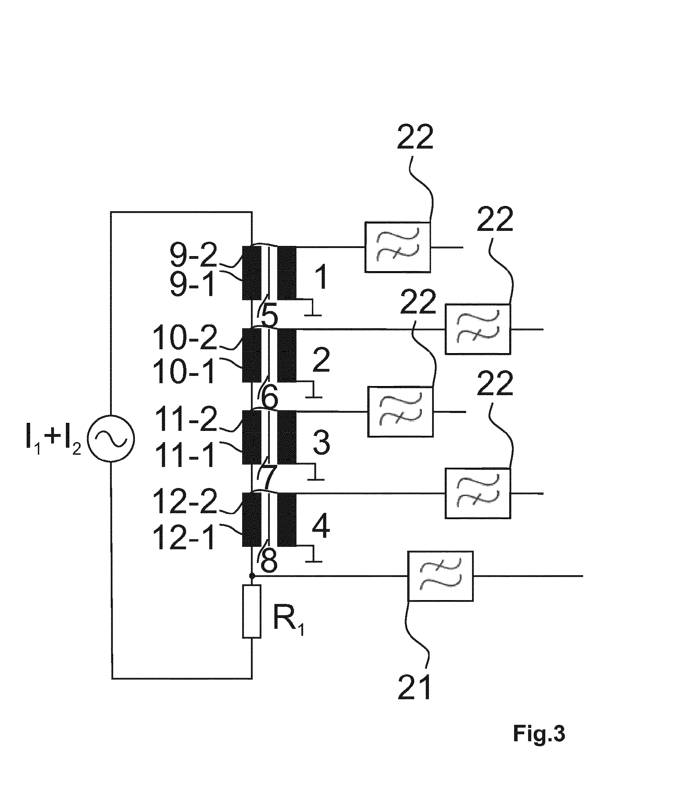

Referring now to Fig. 3, a schematic diagram of a magnetic sensor 300 according to the third embodiment is shown. The magnetic sensor 300 may be based on either the magnetic sensor 100 of the first embodiment or the magnetic sensor 200 of the second embodiment. Exemplarily, the magnetic sensor 300 will be described with reference to the first embodiment. However, this shall not be construed as limiting the invention.

In this embodiment a functional advantage of the magnetic sensor 300 is exemplified which allows incorporation of this sensor in a contactless position sensor where a plurality of sensor coils are required.

Specifically, the magnetic sensor 300 includes four sensor coils 1, 2, 3 and 4 which are connected to each other such that the primary windings 9-1, 10-1, 11-1, 12-1 of each of the four sensor coils 1, 2, 3 and 4 form a series circuit.

Further, the electrical circuit 17 is configured to drive the low frequency current $I_1$ within the series circuit of primary windings 9-1, 10-1, 11-1, 12-1 of the four sensor coils 1, 2, 3 and 4 which form a series circuit. The electrical circuit 17 is configured to drive the low frequency current $I_1$ within the primary windings for magnetization of the magnetic permeable cores 5, 6, 7, 8 of each of the four sensor coils 1, 2, 3 and 4 into a magnetic saturation state.

Additionally, the electrical circuit 17 is configured to detect the magnetic saturation state of the magnetic permeable cores 5, 6, 7, 8 based on an inductance L of the respective of the four sensor coils 1, 2, 3 and 4 determined by the electrical circuit 17 driving a high frequency current $I_2$ within the series circuit of primary windings 9-1, 10-1, 11-1, 12-1. For conciseness, it shall be only referred to the first or second embodiment for the definition of the low and the high frequency current $I_1$ and $I_2$.

In summary, this arrangement of sensor coil 1, 2, 3 and 4 in the magnetic sensor 300 allows for a separate and parallel detection of the magnetic saturation state of the magnetic permeable cores 5, 6, 7, 8. Moreover, this is due to the electrical circuit 17 determining the inductance of each of the four sensor coils 1, 2, 3 and 4.

Referring now to a further embodiment of the invention, a contactless position sensor is suggested incorporating either of the magnetic sensors 100, 200 or 300 according to the first second or third embodiment of the invention. The contactless position sensor according to this embodiment allows detecting the position of a ferromagnetic target 20 by way of deflection of an external magnetic field $H_{ext}$.

For this purpose, the contactless position sensor includes a magnetic sensor 100 according to either one of the previously described embodiments. This magnetic sensor 100 comprises at least two sensor coils 1, 2 and the electrical circuit 17 which is configured to drive a predetermining current I including, as components, the low frequency current $I_1$ and the high frequency current $I_2$, within each of the at least two sensor coils. For conciseness, it shall be only referred to the previously described embodiment for the definition of the low and the high frequency current $I_1$ and $I_2$.

The electrical circuit 17 is further configured to detect the position of the ferromagnetic target 20 by subtracting from each other amplitude levels of the determined high frequency voltage components $V_{1H}$, $V_{2H}$ of two of the voltages $V_1$, $V_2$ across the respective of the at least two sensor coils, and by comparing the subtraction result to a pre-determined reference pattern.

For a more detailed description of the detection of the position of the ferromagnetic target, the reader is referred to respective passages in the specification, drawings and abstract of the priority European patent application EP 13 163 196.2, filed with the EPO on April 10, 2013, which is incorporated herein by reference in its entirety.

Specifically, each of the at least two sensor coils of the contactless position sensor of this embodiment comprises a magnetic permeable core and windings surrounding the magnetic permeable core defining a coil axis.

The term "coil axis" is to be understood as corresponding to the directivity of an internal magnetic field H induced in each of the sensor coils. Specifically, the geometry of the magnetic permeable core and the shape of the respective windings define the directivity of the magnetic field H.

Additionally, the at least two sensor coils of the contactless position sensor of this embodiment are arranged with the coil axes essentially in parallel to each other, and with one end of each of the at least two sensor coils facing a space for a ferromagnetic target to move across with respect to each of the at least two coil axes.

According to a further embodiment a contactless position sensor system is suggested comprising the previously described contactless position sensor. In this contactless position sensor system a permanent magnet is arranged in-between the at least two sensor coils for generating an external magnetic field which is essentially perpendicular with respect to each of the at least two coil axes. A ferromagnetic target is further comprised in the contactless position sensor system which is to be moved across with respect to each of the at least two coil axes in a space faced by one end of each of the at least two sensor coils. Consequently, the contactless position sensor detects a position of a ferromagnetic target by way of deflection of the external magnetic field.

**References:**

| Reference Numerals | Description |
|---|---|
| 100, 200, 300 | Magnetic sensor |
| 1, 2, 3, 4 | Sensor coils |
| 5, 6, 7, 8 | Magnetic permeable core |
| 9-1, 10-1, 11-1, 12-1 | Primary winding |
| 9-2, 10-2, 11-2, 12-2 | Secondary winding |
| 17 | Electrical circuit |
| 18 | LC oscillator |
| 19 | Amplifier |
| R1 | Resistor |

(continued)

| Reference Numerals | Description |
|---|---|
| C1 | Capacitor |
| 20 | Ferromagnetic target |
| 21 | Low-pass filter |
| 22 | High-pass filter |

## Claims

1. Magnetic sensor (100) for detecting a magnetic saturation state of a magnetic permeable core comprised in a sensor coil, comprising:

   at least one sensor coil (1) each comprising a magnetic permeable core (5), and
   a primary and secondary winding (9-1, 9-2) surrounding the magnetic permeable core (5); and
   an electrical circuit (17) configured to drive a low frequency current ($I_1$) within the primary winding (9-1) of the at least one sensor coil (1) for magnetization of the magnetic permeable core (5) into a magnetic saturation state; wherein
   the electrical circuit (17) is further configured to detect the magnetic saturation state of the magnetic permeable core (5) based on an inductance of the at least one sensor coil (1) determined by the electrical circuit (17) driving a high frequency current ($I_2$) within the at least one sensor coil (1).

2. The magnetic sensor (100) according to claim 1, wherein the electrical circuit (17) is either configured to drive the high frequency current ($I_2$), superimposed on the low frequency current ($I_1$), within the primary winding (9-1) of the at least one sensor coil (1) or configured to drive the high frequency current ($I_2$) within the secondary winding (9-2) of the at least one sensor coil (1).

3. The magnetic sensor (100) according to claim 1 or 2, wherein the electrical circuit (17) is configured to detect the magnetic saturation state of the magnetic permeable core (5) by comparing the determined inductance level to a pre-determined threshold level.

4. The magnetic sensor (100) according to one of claims 1 to 3, wherein the electrical circuit (17) is configured such that the inductance of the at least one sensor coil (1) is determined as inductance of the secondary winding (9-2) of the at least one sensor coil (1).

5. The magnetic sensor (100) according to one of claims 1 to 4, wherein the electrical circuit (17) is configured such that the inductance of the at least one sensor coil (1) is determined based on the high frequency voltage component ($V_H$) across the at least one sensor coil (1).

6. The magnetic sensor (100) according to one of claims 1 to 5, wherein the electrical circuit (17) is configured such that the inductance of the at least one sensor coil (1) is determined based on either the amplitude level or the frequency of the high frequency voltage component ($V_H$) across the at least one sensor coil (1).

7. The magnetic sensor (200) according to one of claims 1 to 6, wherein the electrical circuit (17) comprises a capacitor ($C_1$) for each of the at least one sensor coil (1), the capacitor ($C_1$) being connected to the secondary winding (9-2) of the at least one sensor coil (1) such that an LC oscillator (18) is formed.

8. The magnetic sensor (200) according to claim 7, wherein the LC oscillator (18), formed by the capacitor ($C_1$) and the secondary winding (9-2), is configured to oscillate thereby driving the high frequency current ($I_2$) within the secondary winding (9-2) of the at least one sensor coil (1).

9. The magnetic sensor (200) according to claim 7 or 8, wherein the electrical circuit (17) further comprises an amplifier (19) for each of the at least one sensor coil (1), the amplifier (19) being configured to stimulate the LC oscillator (18) such that it oscillates.

10. The magnetic sensor (200) according to one of claims 7 to 9, wherein the electrical circuit (17) is configured such that the inductance of the at least one sensor coil (1) is determined based on the oscillation frequency of the LC oscillator (19).

11. The magnetic sensor (300) according to one of claims 1 to 10, wherein, in case the magnetic sensor (300) comprises at least two sensor coils (1, 2):

   the at least two sensor coils (1, 2) are connected to each other such that the primary windings (9-1, 10-1) of each of the at least two sensor coils (1, 2) form a series circuit; and
   the electrical circuit (17) is configured to drive the low frequency current ($I_1$) within the series circuit of primary windings (9-1, 10-1) of each of the at least two sensor coils (1,2).

12. Magnetic field sensor for detecting a magnetic field in a sensor coil when its magnetic permeable core is in a magnetic saturation state, comprising:

   the magnetic sensor (200) according to one of claims 1 - 11; wherein
the electrical circuit (17) is configured to determine, when the magnetic saturation state is detected, a value of the low frequency current ($I_1$) which is driven within the primary winding (9-1) of the at least one sensor coil (1), the detected value of the low frequency current ($I_1$) corresponding to the magnetic field in the at least one sensor coil (1).

13. Contactless position sensor for detecting the position of a ferromagnetic target by way of deflection of an external magnetic field, comprising:

the magnetic sensor (300) according to one of claims 1 - 11; wherein the magnetic sensor (300) comprises at least two sensor coils (1, 2) and the electrical circuit (17) is configured to drive a predetermining current (I) including, as components, the low frequency current ($I_1$) and the high frequency current ($I_2$), within each of the at least two sensor coils; and wherein the electrical circuit is configured to detect the position of the ferromagnetic target by subtracting from each other amplitude levels of the determined high frequency voltage components of two of the voltages across the respective of the at least two sensor coils, and by comparing the subtraction result to a pre-determined reference pattern.

14. The contactless position sensor according to claim 13, wherein:

the at least two sensor coils each comprises a magnetic permeable core and windings surrounding the magnetic permeable core defining a coil axis; and the at least two sensor coils are arranged with the coil axes essentially in parallel to each other, and with one end of each of the at least two sensor coils facing a space for a ferromagnetic target (20) to move across with respect to each of the at least two coil axes.

15. Contactless position sensor system, comprising:

a contactless position sensor (100) according to one of claims 13 to 14;
a permanent magnet arranged in-between the at least two sensor coils for generating an external magnetic field which is essentially perpendicular with respect to each of the at least two coil axes; and
a ferromagnetic target which is to be moved across with respect to each of the at least two coil axes in a space faced by one end of each of the at least two sensor coils;

wherein contactless position sensor detects a position of a ferromagnetic target by way of deflection of the external magnetic field.

Fig. 1

Fig. 2

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0684454 A1
- EP 0891560 B1
- EP 13163196 A